# EUROPEAN PATENT SPECIFICATION

(11) **EP 1 262 428 B1**
(45) Date of publication and mention of the grant of the patent: **08.09.2004**
(21) Application number: 02011924.4
(22) Date of filing: 29.05.2002
(51) Int. Cl.: B65G 25/10

(54) **Package stacking apparatus**
Stapelgerät für Päckchen
Dispositif de stockage de paquets

(30) Priority: 30.05.2001 IT BO20010345
(43) Date of publication of application: 04.12.2002
(73) Proprietor: G.D SOCIETA' PER AZIONI, 40133 Bologna (BO) (IT)
(72) Inventor: Bertuzzi, Ivanoe, 40033 Casalecchio di Reno (IT); Fraschetti, Marco, 40033 Casalecchio di Reno (IT); Draghetti, Fiorenzo, 40059 Medicina (IT)
(74) Representative: Jorio, Paolo

(56) References cited:
- EP-A- 0 137 570
- DE-A- 3 031 661

## Description

The present invention relates to an article conveyor.

More specifically, the present invention relates to a conveyor for conveying packets of cigarettes or packs of packets of cigarettes, to which the following description refers purely by way of example.

Packets of cigarettes are transferred from a cigarette packing machine to a cellophaning machine, which wraps a sheet of polypropylene about each packet; the packets of cigarettes wrapped in sheets of polypropylene are transferred from the cellophaning machine to a cartoning machine for forming packs normally containing ten packets of cigarettes; and the packs of packets of cigarettes are transferred from the cartoning machine to a machine for packing a number of packs in a single container.

Transfer between the above machines is made by means of conveyors located over the machines to leave the space between adjacent machines clear for transit.

The conveyors comprise vertical conveyors, which provide for stacking the packets or packs in a column and pushing the bottom packet or pack in the column upwards, and have the drawback of crushing and so permanently deforming the bottom packets or packs in the column

The document DE 30 31 661 is disclosing a conveyor according to the preamble of claim 1.

It is an object of the present invention to provide a straightforward, low-cost article conveyor involving no interaction between the various packets or packs.

According to the present invention, there is provided a conveyor for conveying articles, in particular packets of cigarettes or packs of packets of cigarettes, and for feeding said articles along a given path and in a given direction; the conveyor comprising a guide parallel to said first direction, feed means for feeding said articles along said path, and a drive member for driving said feed means; and the conveyor being characterized in that :
- said guide comprises first supports defining a succession of first seats along said path, each first seat housing at least one article;
- said feed means comprise a slide movable with respect to said guide, and second supports defining second seats along the slide, each second seat housing at least one article;
- said drive member moves the slide back and forth between the first seats to transfer the articles, by means of the second seats, between two first seats in said first direction.

A non-limiting embodiment of the present invention will be described by way of example with reference to the accompanying drawings, in which:
Figure 1 shows a view in perspective, with parts removed for clarity, of an article conveyor in accordance with the present invention;
Figure 2 shows a section, along line II-II, of the Figure 1 conveyor;
Figure 3 shows a front view of the Figure 1 conveyor;
Figure 4 shows a larger-scale, partly sectioned side view of a detail of the Figure 3 conveyor.

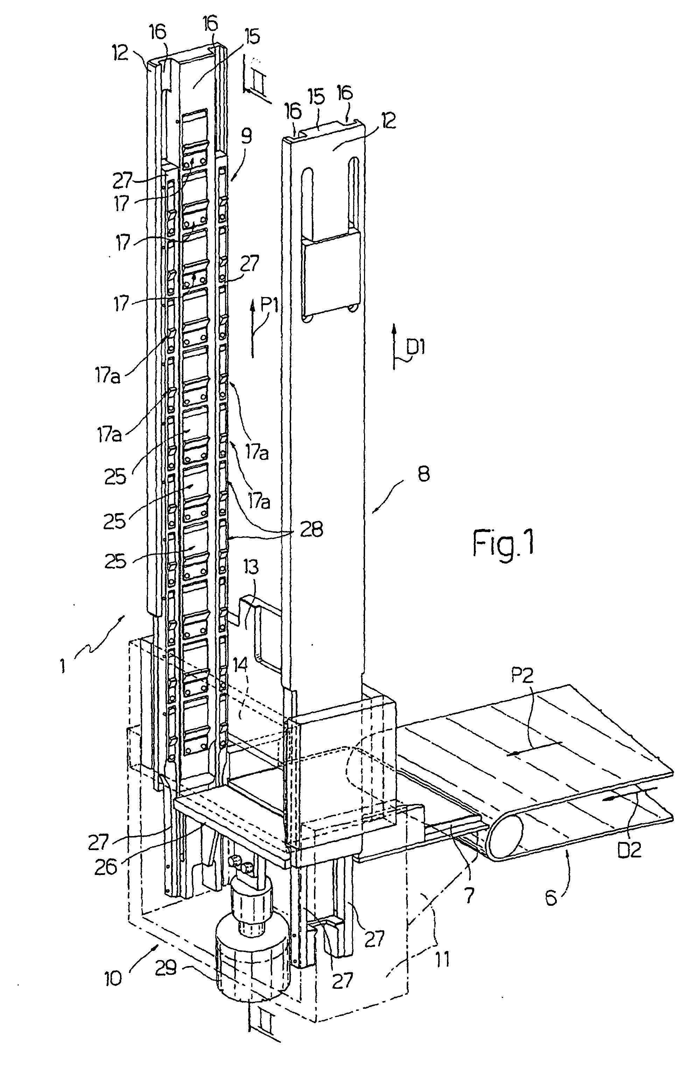

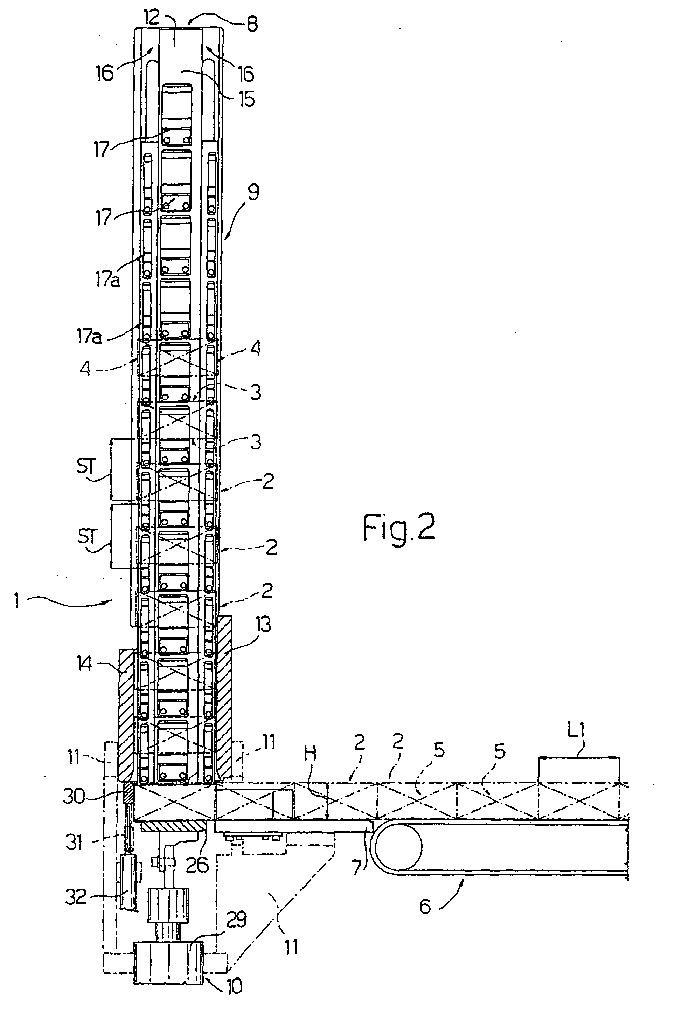

Number 1 in Figures 1 and 2 indicates a conveyor for conveying articles 2 defined, for example, by packets of cigarettes or packs of packets of cigarettes. In the following description, articles 2 will be referred to as "packets of cigarettes" for the sake of simplicity, though this in no way detracts from the more general scope of the present invention.

Each packet 2 of cigarettes is in the form of a parallelepiped of height H, width L1, and length L2, and comprises two main faces 3, two lateral faces 4, and two end faces 5. Conveyor 1 is located between a conveyor 6, from which it receives packets 2, and a conveyor (not shown), to which it releases packets 2. Conveyor 1 extends in a vertical direction D1 and defines a path P1 parallel to direction D1; while conveyor 6 extends in a direction D2 perpendicular to direction D1, and defines a path P2 along which packets 2 are fed parallel to direction D2. Conveyor 1 comprises a platform 7 perpendicular to direction D1 and for receiving packets 2 from conveyor 6; a guide 8 parallel to path P1; a slide 9 for feeding packets 2 along path P1; and a drive member 10 connected to slide 9.

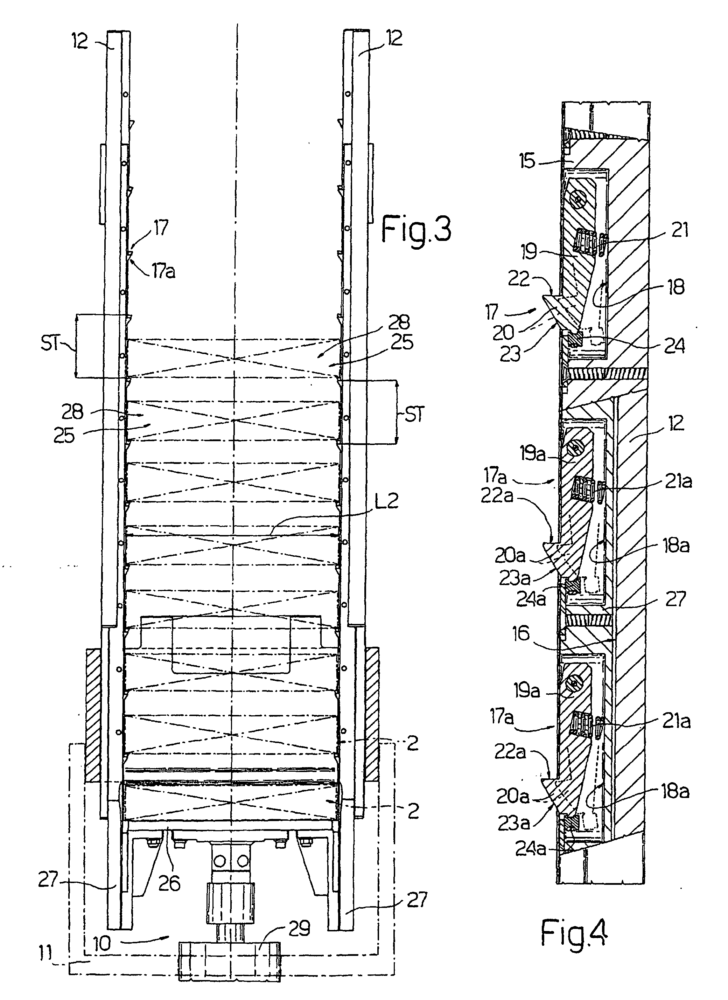

Platform 7, guide 8 and drive member 10 are supported by a frame 11, while slide 9 is connected to drive member 10 and is movable with respect to guide 8 to feed packets 2 along path P1. Guide 8 comprises two facing rails 12 parallel to direction D1; and two plates 13 and 14 facing and parallel to each other and fixed to rails 12. Each plate 13, 14 is fixed perpendicularly to rails 12 to keep rails 12 separated by a distance substantially equal to length L2 of packets 2. Each rail 12 has a central portion 15 and two grooves 16 on opposite sides of central portion 15, and comprises a succession of supports 17 equally spaced in direction D1. As shown in Figure 4, each support 17 is housed in a pocket 18 formed in central portion 15, and comprises a lever 19 hinged at a first end to pocket 18 and having a hook 20 at a second end; and a spring 21 located between lever 19 and pocket 18 to keep lever 19 in the work position shown by the continuous line in Figure 4 and in which hook 20 projects from pocket 18. Lever 19 is movable between the work position, shown by the continuous line, and a rest position, shown by the dash line, in which hook 20 is housed substantially entirely inside pocket 18. Hook 20 comprises a flat face 22, which, in the work position, is perpendicular to direction D1; and an inclined face 23 sloping with respect to direction D1 by an angle of about twenty degrees. Hook 20 is connected to an elastic element 24 for locking lever 19 in the work position against a wall of pocket 18, and for cushioning the impact of hook 20 against the wall of pocket 18. With reference to Figure 3, each support 17 of one rail 12 faces and is aligned with a support 17 of the opposite rail 12, so that faces 22 in their respective work positions define a supporting surface perpendicular to direction D1. That is, supports 17 define a succession of seats 25 equally spaced with a spacing ST in direction D1, and each for housing a packet 2.

With reference to Figures 1, 2 and 3, slide 9 comprises a platform 26 perpendicular to direction D1; and four bars 27 parallel to direction D1. Each bar 27 is fixed to platform 26, engages a groove 16 in one of rails 12, and, in substantially the same way as rails 12, comprises a succession of supports 17a. With reference to Figure 4, each support 17a is housed in a pocket 18a formed in bar 27, and comprises a lever 19a hinged at a first end to pocket 18a and having a hook 20a at a second end. Lever 19a is movable between a work position, shown by the continuous line and in which hook 20a projects from pocket 18a, and a rest position shown by the dash line and in which lever 19a and the hook are housed substantially entirely inside pocket 18a. Each support 17a has a spring 21a housed in pocket 18a to keep lever 19a in the work position. Hook 20a comprises a flat face 22a, which, in the work position, is perpendicular to direction D1; and a flat face 23a sloping with respect to direction D1 by an angle of about 20°. Hook 20a is connected to an elastic element 24a for locking lever 19a in the work position against a wall of pocket 18a, and for cushioning the impact of hook 20a against the wall of pocket 18a. With reference to Figure 3, each support 17a of each bar 27 is aligned with a support 17a of each of the other three bars 27, so that faces 22a define a supporting surface for a packet 2 of cigarettes. In other words, platform 26 and supports 17a define, on slide 9 and in direction D1, a succession of seats 28 equally spaced with the same spacing ST as seats 25.

Drive member 10 comprises an actuator 29 connected to platform 26 to move the platform and bars 27 back and forth in direction D1. That is, the whole of slide 9 is moved back and forth, with respect to guide 8, one step equal to or slightly greater than spacing ST of seats 25 and 28.

With reference to Figure 2, conveyor 1 comprises a plate 30 moved by an actuator, in direction D1 and along a guide 31, between a raised position shown by the continuous line in Figure 2, and a lowered position shown by the dash line in Figure 2.

Operation of conveyor 1 will be described as of a start configuration, in which conveyor 1 is empty, platform 26 is aligned with platform 7, and seats 25 and seats 28 are substantially coincident, i.e. the four supports 17a of each seat 28 are located slightly below the two supports 17 of seat 25. With conveyor 1 in the start configuration described above, conveyor 6 feeds packets 2 in direction D2 on to platform 7. Packets 2 rest on platform 7 on respective main faces 3, in which position, a packet 2 is transferred on to platform 26 and arrested in a given position on platform 26 by plate 30. In the event a sensor (not shown) located along path P2 detects any flaws in the packet, plate 30 is lowered and packet 2 automatically unloaded off platform 26 and rejected. Conversely, if no flaws are detected, packet 2 is kept on platform 26, and slide 9 is operated by member 10 to raise packet 2 one step substantially equal to spacing ST. As slide 9 moves up, the packet 2 resting on platform 26 interferes with the two facing supports 17 located directly over platform 26, and pushes levers 19 inside respective pockets 18. That is, as hooks 20 contact packet 2, springs 21 yield under the pressure exerted by packet 2 until packet 2 is eventually located on top of hooks 20, and springs 21 restore levers 19 to the work position. Contact between each hook 20 and packet 2 is made along the inclined face 23 of hook 20 and an end face 5 of packet 2. Once levers 19 are restored to the work position, hooks 20 project outwards of pocket 18 to support packet 2 inside seat 25. At which point, slide 9 is lowered to align platform 26 once more with platform 7. As slide 9 moves down, the four supports 17a located directly over platform 26 contact packet 2 and are pushed inside relative pocket 18a until the four hooks 20a are eventually positioned beneath packet 2.

At the next cycle of slide 9, the packet 2 inside the seat 25 into which the packet was transferred from platform 26 is raised by said four supports 17a and fed into the next seat 25 up, in the same way as when transferred from platform 26 to seat 25. In other words, each packet 2 conveyed by conveyor 1 is transferred one step between two adjacent seats 25 by means of a seat 28, which acts as a shuttle between two adjacent seats 25.

Conveyor 1 can be adapted easily to packets or packs of different lengths L2 by simply adjusting the distance between rails 12 and bars 27, and therefore by providing adjustable fastening systems for fixing rails 12 to plates 13, 14 and frame 11, and for fixing bars 27 to platform 26.

## Claims

1. A conveyor for conveying articles, in particular packets of cigarettes or packs of packets of cigarettes, and for feeding said articles (2) along a given path (P1) and in a given direction (D1); the conveyor (1) comprising a guide (8) parallel to said direction (D1), feed means (9) for feeding said articles (2) along said path (P1), and a drive member (10) for driving said feed means (9); and the conveyor being **characterized in that** :
- said guide (8) comprises first supports (17) defining a succession of first seats (25) along said path (P1), each first seat (25) housing at least one article (2);
- said feed means comprise a slide (9) movable with respect to said guide (8), and second supports (17a) defining second seats (28) along the slide (9), each second seat (28) housing at least one article (2);
- said drive member (10) moves the slide (9) back and forth between the first seats (25) to transfer the articles (2), by means of the second seats (28), between two first seats (25) in said direction (D1).

2. A conveyor as claimed in Claim 1, **characterized in that** said first supports (17) are equally spaced along said guide (8) with a given spacing (ST); and said second supports (17a) are equally spaced along said slide (9) with the same spacing (ST) as said first supports (17).

3. A conveyor as claimed in Claim 2, **characterized in that** said drive member (10) is moved back and forth one step substantially equal to said spacing (ST).

4. A conveyor as claimed in any one of Claims 1 to 3, **characterized in that** said first supports (17) are movable, with respect to the guide (8), between a work position projecting from said guide (8) to support said articles (2) in said first seats (25), and a rest position permitting transfer of said articles (2) between adjacent first seats (25).

5. A conveyor as claimed in any one of Claims 1 to 4, **characterized in that** said second supports (17a) are movable, with respect to the slide (9), between a work position projecting from said slide (9) to support said articles (2) in said second seats (28), and a rest position permitting transfer of said articles (2) between adjacent second seats (28).

6. A conveyor as claimed in Claim 4 or 5, **characterized in that** each first support (17) has a first spring (21) for keeping said first support (17) in said work position; and each second support (17a) has a second spring (21a) for keeping said second support (17a) in said work position.

7. A conveyor as claimed in any one of Claims 1 to 6, **characterized in that** said guide (8) comprises two facing rails (12) parallel to the said direction (D1); each rail (12) having a succession of first supports (17); and each first seat (25) being defined by two first supports (17) at the same level in the said direction (D1).

8. A conveyor as claimed in Claim 7, **characterized in that** said slide (9) comprises two bars (27) fitted in sliding manner to said rails (12); each bar (27) having a succession of second supports (17a); and the second supports (17a) at the same level in the said direction (D1) defining a second seat (28).

9. A conveyor as claimed in Claim 7, **characterized in that** said slide (9) comprises four bars (27) housed in respective grooves (16) in said rails (12); each second seat (28) being defined by four second supports (17a) at the same level on the respective four bars (27).

10. A conveyor as claimed in Claim 8 or 9, **characterized in that** said slide (9) comprises a platform (26) perpendicular to the said direction (D1) and fixed to said bars (27).

11. A conveyor as claimed in Claim 10, **characterized in that** said platform (26) is located beneath said second supports (17a) and defines one of said second seats (28); said platform (26) receiving said articles (2) from a supply conveyor (6).

12. A conveyor as claimed in Claim 10, **characterized by** comprising a stop (30) adjacent to said platform (26); said stop being movable between a first position to arrest said articles (2) in a given position, and a second position to expel any faulty articles (2).

## Patentansprüche

1. Förderer zum Befördern von Gegenständen, insbesondere von Zigaretten-Päckchen oder von Bündeln von Zigaretten-Päckchen, und zum Vorwärtsbewegen der Gegenstände (2) entlang einer gegebenen Bahn (P1) und in einer gegebenen Richtung (D1), wobei der Förderer (1) eine Führung (8) parallel zur Richtung (D1), eine Zufuhreinrichtung (9) zum Zuführen der Gegenstände (2) entlang der Bahn (P1) und ein Antriebselement (10) zum Antreiben der Zufuhreinrichtung (9) aufweist, wobei der Förderer
**dadurch gekennzeichnet ist,**
- **dass** die Führung (8) erste Halter (17) aufweist, die eine Aufeinanderfolge von ersten Lagern (25) entlang der Bahn (P1) bestimmen, wobei jedes erste Lager (25) mindestens einen Gegenstand (2) aufnimmt;
- **dass** die Zufuhreinrichtung eine Führung (9), die in Bezug zur Führung (8) beweglich ist, und zweite Halter (17a) aufweist, die zweite Lager (28) entlang der Führung (9) bestimmen, wobei jedes zweite Lager (28) mindestens einen Gegenstand (2) aufnimmt;
- **dass** das Antriebselement (10) die Führung (9) zwischen den ersten Lagern (25) zurück und vorwärts bewegt, um die Gegenstände (2) mittels der zweiten Lager (28) zwischen zwei ersten Lagern (25) in der Richtung (D1) zu übertragen.

2. Förderer nach Anspruch 1,
**dadurch gekennzeichnet,**
**dass** die ersten Halter (17) entlang der Führung (8) voneinander mit einem bestimmten Abstand (ST) beabstandet sind, und dass die zweiten Halter (17a) entlang der Führung (9) voneinander mit dem selben Abstand (ST) wie die ersten Halter (17) beabstandet sind.

3. Förderer nach Anspruch 2,
**dadurch gekennzeichnet,**
**dass** das Antriebselement (10) einen Schritt im wesentlichen gleich dem Abstand (ST) zurück und vorwärts bewegt wird.

4. Förderer nach einem der Ansprüche 1 bis 3,
**dadurch gekennzeichnet,**
**dass** die ersten Halter (17) in Bezug zur Führung (8) zwischen einer von der Führung (8) vorstehenden Arbeitsposition zum Halten der Gegenstände (2) in den ersten Lagern (25) und einer Ruheposition beweglich sind, die eine Übertragung der Gegenstände (2) zwischen benachbarten ersten Lagern (25) erlaubt.

5. Förderer nach einem der Ansprüche 1 bis 4,
**dadurch gekennzeichnet,**
**dass** die zweiten Halter (17a) in Bezug zur Führung (9) zwischen einer von der Führung (9) vorstehenden Arbeitsposition zum Halten der Gegenstände (2) in den zweiten Lagern (28) und einer Ruheposition beweglich sind, die eine Übertragung der Gegenstände (2) zwischen benachbarten zweiten Lagern (28) erlaubt.

6. Förderer nach Anspruch 4 oder 5,
**dadurch gekennzeichnet,**
**dass** jeder erste Halter (17) eine erste Feder (21) zum Halten des ersten Halters (17) in der Arbeitsposition besitzt, und dass jeder zweite Halter (17a) eine zweite Feder (21 a) zum Halten des zweiten Halters (17a) in der Arbeitsposition besitzt.

7. Förderer nach einem der Ansprüche 1 bis 6,
**dadurch gekennzeichnet,**
**dass** die Führung (8) zwei einander zugewandte Schienen (12) aufweist, die zur Richtung (D1) parallel sind, wobei jede Schiene (12) eine Aufeinanderfolge von ersten Haltern (17) besitzt, und dass jedes erste Lager (25) durch zwei erste Halter (17) auf dem gleichen Höhenniveau in der gleichen Richtung (D1) bestimmt ist.

8. Förderer nach Anspruch 7,
**dadurch gekennzeichnet,**
**dass** die Führung (9) zwei Stangen (27) aufweist, die in die Schienen (12) gleitbeweglich eingepasst sind, wobei jede Stange (27) eine Aufeinanderfolge von zweiten Haltern (17a) besitzt, und dass die zweiten Halter (17a) auf dem gleichen Höhenniveau in der gleichen Richtung (D1) ein zweites Lager (28) bestimmen.

9. Förderer nach Anspruch 7,
**dadurch gekennzeichnet,**
**dass** die Führung (9) vier Stangen (27) aufweist, die in entsprechenden Rillen (16) in den Schienen (12) untergebracht sind, wobei jedes zweite Lager (28) durch vier zweite Halter (17a) auf dem gleichen Höhenniveau an den entsprechenden vier Stangen (27) bestimmt ist.

10. Förderer nach Anspruch 8 oder 9,
**dadurch gekennzeichnet,**
**dass** die Führung (9) eine Plattform (26) aufweist, die zur Richtung (D1) senkrecht steht und die an den Stangen (27) befestigt ist.

11. Förderer nach Anspruch 10,
**dadurch gekennzeichnet,**
**dass** die Plattform (26) unter den zweiten Haltern (17a) lokalisiert ist und eines der zweiten Lager (28) bestimmt, wobei die Plattform (26) die Gegenstände (2) von einem Zufuhr-Förderer (6) empfängt.

12. Förderer nach Anspruch 10,
**gekennzeichnet durch**
einen zur Plattform (26) benachbarten Anschlag (30), wobei der Anschlag zwischen einer ersten Position zum Festhalten der Gegenstände (2) in einer bestimmten Position und einer zweiten Position zum Ausstoßen jedes fehlerhaften Gegenstandes (2) beweglich ist.

## Revendications

1. Transporteur pour le transport d'articles, en particulier des paquets de cigarettes ou des lots de paquets de cigarettes et pour l'alimentation desdits articles (2) sur un trajet donné (P1) et dans une direction donnée (D1), transporteur (1) comprenant un guide (8) parallèle à ladite direction (D1), des moyens d'alimentation (9) pour alimenter lesdits articles (2) le long dudit trajet (P1), et une pièce d'entraînement (10) pour entraîner lesdits moyens d'alimentation (9), transporteur **caractérisé en ce que** :
- ledit guide (8) comprend des premiers supports (17) définissant une série de premiers sièges (25) le long dudit trajet (P1), chaque premier siège (25) logeant au moins un article (2) ;
- lesdits moyens d'alimentation comprennent une glissière (9) mobile par rapport audit guide (8) et des seconds supports (17a) définissant des seconds sièges (28) le long de la glissière (9), chaque second siège (28) logeant au moins un article (2) ; et
- ladite pièce d'entraînement (10) déplace la glissière (9) d'avant en arrière entre les premiers sièges (25) pour transférer les articles (2) au moyen des seconds sièges (28) entre deux premiers sièges (25) dans ladite direction (D1).

2. Transporteur selon la revendication 1, **caractérisé en ce que** lesdits premiers supports (17) sont espacés, de façon égale, le long dudit guide (8) d'un espacement donné (ST) et lesdits seconds supports (17a) sont espacés de façon égale le long de ladite glissière (9) du même espacement (ST) que lesdits premiers supports (17).

3. Transporteur selon la revendication 2, **caractérisé en ce que** ladite pièce d'entraînement (10) est déplacée d'avant en arrière d'un pas sensiblement égal audit espacement (ST).

4. Transporteur selon l'une quelconque des revendications 1 à 3, **caractérisé en ce que** lesdits premiers supports (17) sont mobiles par rapport au guide (8) entre une position de travail se projetant dudit guide (8) pour supporter lesdits articles (2) dans lesdits premiers sièges (25) et une position de repos autorisant le transfert desdits articles (2) entre des premiers sièges adjacents (25).

5. Transporteur selon l'une quelconque des revendications 1 à 4, **caractérisé en ce que** lesdits seconds supports (17a) sont mobiles par rapport à la glissière (9) entre une position de travail se projetant à partir de ladite glissière (9) pour supporter lesdits articles (2) dans lesdits seconds sièges (28) et une position de repos autorisant le transfert desdits articles (2) entre des seconds sièges adjacents (28).

6. Transporteur selon la revendication 4 ou 5, **caractérisé en ce que** chaque premier support (17) possède un premier ressort (21) pour maintenir ledit premier support (17) dans ladite position de travail et chaque second support (17a) possède un second ressort (21a) pour maintenir ledit second support (17a) dans ladite position de travail.

7. Transporteur selon l'une quelconque des revendications 1 à 6, **caractérisé en ce que** ledit guide (8) comprend deux rails en vis-à-vis (12) parallèles à ladite direction (D1), chaque rail (12) possédant une série de premiers supports (17) et chaque premier siège (25) étant défini par deux premiers supports (17) au même niveau dans ladite direction (D1).

8. Transporteur selon la revendication 7, **caractérisé en ce que** ladite glissière (9) comprend deux barres (27) montées, de façon coulissante, sur lesdits rails (12), chaque barre (27) possédant une série de seconds supports (17a) et les seconds supports (17a) au même niveau dans ladite direction (D1) définissant un second siège (28).

9. Transporteur selon la revendication 7, **caractérisé en ce que** ladite glissière (9) comprend quatre barres (27) logées dans des rainures respectives (16) desdits rails (12), chaque second siège (28) étant défini par quatre seconds supports (17a) au même niveau sur les quatre barres respectives (27).

10. Transporteur selon la revendication 8 ou 9, **caractérisé en ce que** ladite glissière comprend une plate-forme (26) perpendiculaire à ladite direction (D1) et fixée sur lesdites barres (27).

11. Transporteur selon la revendication 10, **caractérisé en ce que** ladite plate-forme (26) est positionnée en dessous desdits seconds supports (17a) et définit un desdits seconds sièges (28), ladite plate-forme (26) recevant lesdits articles (2) à partir d'un transporteur d'alimentation (6).

12. Transporteur selon la revendication 10, **caractérisé en ce qu'**il comprend une butée (30) adjacente à ladite plate-forme (26), ladite butée étant mobile entre une première position pour arrêter lesdits articles (2) dans une position donnée et une seconde position pour expulser tout article défectueux (2).
